# FASCICULE DE BREVET EUROPEEN

(11) **EP 2 788 205 B1**
(45) Date de publication et mention de la délivrance du brevet: **24.06.2015**
(21) Numéro de dépôt: 12795782.7
(22) Date de dépôt: 27.11.2012
(51) Int. Cl.: B60C 11/11, B60C 11/03, B60C 11/13

(54) **BANDE DE ROULEMENT A CHANFREINS VARIABLES**
LAUFSTREINFEN PROFIL MIT VARIABLEN FASEN
TREAD WITH VARIABLE BLOCK CHAMFERS

(30) Priorité: 08.12.2011 FR 1161355
(43) Date de publication de la demande: 15.10.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BOURGEOIS, Frédéric, F-63040 Clermont-Ferrand Cedex 9 (FR); BRUNEAU, François-Xavier, F-63040 Clermont-Ferrand Cedex 9 (FR)
(74) Mandataire: Diernaz, Christian
(86) Numéro de dépôt international: PCT/EP2012/073670
(87) Numéro de publication internationale: WO 2013/083429

(56) Documents cités:
- EP-A1- 1 386 758
- EP-A2- 1 020 306
- US-A- 5 456 301

## Description

### DOMAINE DE L'INVENTION

La présente invention concerne les bandes de roulement de pneu pour voiture et notamment les géométries des rainures et incisions dont sont pourvues ces bandes.

### ÉTAT DE LA TECHNIQUE

Il est connu de pourvoir une bande de roulement d'un pneu destiné à équiper une voiture avec une pluralité de rainures d'orientation circonférentielle et transversales, ces rainures délimitant une pluralité de blocs formant une sculpture. Cette bande de roulement comprend une surface de roulement apte à rentrer en contact avec une chaussée pendant le roulage du pneu. Chaque bloc comprend une face de contact formant une partie de la surface de roulement de la bande et des faces latérales délimitant ces rainures. Ces faces latérales coupent la face de contact selon des arêtes.

Dans le cadre de certains usages ou application, il est connu afin d'augmenter l'adhérence de telles bandes de pourvoir au moins certains de ces blocs avec des incisions dont la profondeur peut être sensiblement identique à la profondeur des rainures ou dans certaines applications être choisies de profondeur inférieure à la profondeur des rainures. De cette façon, la bande de roulement comprend une pluralité d'arêtes de matière, ces arêtes étant formées par l'intersection des rainures et des incisions avec la surface de roulement de la bande. Grâce à la présence d'incisions, il est possible d'augmenter le nombre d'arêtes sans toutefois trop réduire la rigidité de la bande de roulement et sans trop augmenter le volume de creux de cette bande.

Il est par ailleurs connu - voir les documents EP 1074405 et WO2002102611, de former une partie chanfreinée sur les parois délimitant les rainures et les incisions d'orientation transversale, et cela au voisinage de la face de contact des blocs de la bande de roulement. Par chanfrein, on entend dans la présente demande tant une partie plane inclinée par rapport à la face latérale qu'elle prolonge jusqu'à la face de contact qu'une partie courbe pouvant se raccorder tangentiellement à l'une ou l'autre desdites faces voire aux deux faces. Un chanfrein est défini par une hauteur, mesurée sur la face latérale, et une largeur, cette dernière dimension étant mesurée sur la face de contact. Ces chanfreins peuvent affecter les arêtes formées par les rainures et par les incisions.

L'intérêt de ces chanfreins est d'améliorer la mécanique du contact de chaque bloc avec la chaussée au moins à l'état neuf et notamment sur chaussée revêtue d'eau par temps de pluie. Les chanfreins modifient la façon dont les arêtes des faces de contact des blocs de sculpture de la bande de roulement viennent en contact avec la chaussée lors du roulage en ligne droite. Bien que ces chanfreins ne soient pas pérennes dans le temps avec l'usure de la bande, on constate qu'ils sont particulièrement utiles lorsque le pneu est neuf, c'est-à-dire lorsque le pneu n'a pas encore été utilisé en roulage. On a pu également constater que ces chanfreins pouvaient s'auto entretenir voire se régénérer notamment lors d'un freinage d'urgence.

On a constaté une amélioration sensible des performances en freinage des pneus pourvus de bandes de roulement ayant des chanfreins.

Ces dispositions de chanfrein sont performantes en roulage de type ligne droite dès lors que la forme de l'empreinte de contact évolue assez peu et que cette forme affecte sensiblement de la même manière l'ensemble des blocs de la bande de roulement qu'ils soient situés dans la partie médiane, sur les bords ou sur les parties intermédiaires de la bande.

À l'usage il a toutefois été constaté que les chanfreins formés sur les arêtes transversales de la bande de roulement pouvaient être cause de bruit en roulage et notamment lorsque la bande de roulement est sollicitée en configuration de virage.

Il est connu qu'un pneu monté sur un véhicule présente une empreinte de contact substantiellement centrée sur la trace de son plan équatorial lorsque ce véhicule roule en ligne droite. Par contre, lors d'une manoeuvre de virage, il est connu qu'il se produit un transfert de charge sur les pneus situés sur le véhicule du côté extérieur au virage. Plus précisément, ce transfert de charge se fait sur la partie axialement à l'extérieur de ces pneus. Ce transfert de charge se traduit par une modification de la forme des empreintes de contact des pneus.

Le document EP1020306 A2 divulgue une bande de roulement selon le préambule de la revendication 1.

Pour performantes que soient les sculptures de bande de roulement comportant des chanfreins sur les découpures d'orientation transversale, il a cependant été constaté une émission de bruit lors de prise de virage qui est un problème requérant une solution adaptée.

### Définitions :

Les conditions de référence - ou encore dites conditions nominales - du pneu sur sa jante de montage telles que définies par la norme européenne E.T.R.T.O. précisent la pression de gonflage correspondant à la capacité de charge maximale admissible du pneu ("Load Index" en anglais) indiquée par son indice de charge et son code vitesse. Toutefois, les conditions d'utilisation d'un pneu sur véhicule diffèrent des conditions de référence ou nominales en ce que la charge portée est d'environ 80% de la charge maximale admissible telle que fixée par les conditions de référence.

L'empreinte de contact du pneu avec la chaussée est obtenue avec le pneu à l'arrêt monté sur sa jante de montage et aux conditions d'utilisation. On note S la surface totale de contact en condition de roulage ligne droite, cette surface étant égale à la surface délimitée par le contour externe de l'empreinte de contact du pneu sous ses conditions nominales ; cette surface inclut les parties en creux. On note S* la surface totale de contact du pneu en condition de virage correspondant à une accélération transversale de 0.3g où g représente l'accélération de la pesanteur. Dans ces conditions de virage le pneu est gonflé à la même pression et est soumis à la même charge. Cette surface S* est égale à la surface totale délimitée par le contour externe de l'empreinte de contact.

Le taux de creux surfacique d'une sculpture est égal au rapport entre la surface des creux (essentiellement formés par des rainures) délimités par les éléments de relief (blocs, nervures) et la surface totale (surface de contact des éléments de relief et surface des creux). Un taux de creux surfacique faible indique une grande surface de contact de la bande de roulement et une faible surface de creux entre les éléments de relief.

Un bloc est un élément en relief formé sur une bande de roulement, cet élément étant délimité par des creux ou rainures et comprenant des parois latérales et une face de contact, cette dernière étant destinée à venir en contact avec la chaussée pendant le roulage.

Une nervure est un élément en relief formé sur une bande de roulement, cet élément étant délimité par deux rainures. Une nervure comprend deux parois latérales et une face de contact, cette dernière étant destinée à venir en contact avec la chaussée.

Par direction radiale, on entend une direction qui est perpendiculaire à l'axe de rotation du pneu (cette direction correspond à la direction de l'épaisseur de la bande de roulement).

Par direction axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Une découpure désigne soit une rainure soit une incision et correspond à l'espace délimité par des parois de matière se faisant face et distantes l'une de l'autre d'une distance moyenne, cette distance moyenne pouvant être nulle. Ce qui différencie une incision d'une rainure c'est précisément cette distance ; dans le cas d'une incision, cette distance est appropriée pour permettre la mise en contact au moins partielle des parois opposées lors du passage dans le contact avec la chaussée. Cette distance, pour une incision destinée à un pneu de véhicule de tourisme, est en règle générale, sur le pneu à l'état neuf, au plus égale à 2 millimètres (2 mm). Dans le cas d'une rainure, les parois de cette rainure ne peuvent venir en contact l'une contre l'autre pendant le roulage aux conditions d'utilisation.

### BREF EXPOSÉ DE L'INVENTION

La présente invention vise à améliorer les performances de bruit en virage des pneus à l'état neuf, ces pneus étant pourvus sur leur bande de roulement de découpures d'orientation transversales.

A cet effet, l'invention a pour objet une bande de roulement pour pneu, cette bande comprenant une pluralité de rainures d'orientation générale circonférentielle délimitant une pluralité d'éléments de relief (blocs et/ou nervures), cette bande de roulement comprenant en outre une pluralité de découpures (rainures et/ou incisions) d'orientation transversale formant des arêtes sur les éléments de relief, ces arêtes étant destinées à rentrer en contact avec une chaussée lors d'un roulage, chaque élément de relief comprenant une face de contact destinée à venir en contact avec la chaussée et des faces latérales coupant cette face de contact selon des arêtes, l'ensemble des faces de contact des éléments de relief formant une surface de roulement de la bande.

Cette bande de roulement s'étend axialement de part et d'autre d'un plan médian - dit plan équatorial - ce plan médian passant par les points de la bande radialement les plus à l'extérieur et ce plan médian divisant la bande en deux parties de même largeur - et jusqu'à des bords de la bande, ces bords de la bande étant définis comme les limites axiales de l'empreinte de contact du pneu sous ses conditions d'utilisation en ligne droite.

Cette bande comprend une pluralité d'éléments de relief ayant des chanfreins sur au moins une pluralité d'arêtes transversales desdits éléments de relief, chaque chanfrein étant défini par un volume moyen correspondant au volume de matière ôtée par rapport à la même géométrie de bloc sans chanfrein (plus le chanfrein est important et plus le volume de matière absente est important).

Cette bande a en roulage ligne droite une surface de contact totale S comprenant une partie Sc sur laquelle toutes les arêtes transversales des éléments de relief sont pourvues de chanfrein et une partie Snc sur laquelle tous les éléments de relief de cette partie sont dépourvus de chanfrein.

Cette bande a dans une sollicitation de virage équivalente à une accélération transversale égale à 0.3g (g étant l'accélération de la pesanteur) une empreinte de contact de surface totale S* formée d'une partie Sc* correspondant à la surface totale des éléments de relief pourvus de chanfreins sur leurs arêtes transversales et une partie Snc* correspondant à la surface totale des éléments de relief dépourvus de tout chanfrein.

Cette bande de roulement est caractérisée en ce que le rapport Snc/Sc est au plus égal à 2% et en ce que le rapport Snc*/Sc* est au moins égal à 10%.

Que ce soit dans le cas du roulage en ligne droite ou en conditions équivalentes à celles d'un virage, les surfaces des rainures circonférentielles ou longitudinales ne sont pas prises en compte dans la mesure des différentes surfaces Snc, Sc, Snc* et Sc*.

"Transversal" doit, ici, être interprété de façon large pour englober également toute direction oblique, c'est-à-dire faisant au maximum un angle de 60 degrés avec la direction de l'axe de rotation du pneu.

Ainsi, lorsque le pneu selon l'invention est sollicité en manoeuvre de virage les blocs pourvus de chanfreins de volume réduit et ceux dépourvus de chanfrein de la partie latérale de la bande située vers l'extérieur du virage sont davantage sollicités dans le contact du pneu avec la chaussée. On note que de manière usuelle l'empreinte de contact évolue en passant du roulage ligne droite à un roulage en virage en adoptant une forme trapézoïdale déportée géométriquement vers l'extérieur du virage, là où sont situés les blocs de la partie de la bande qui sont dépourvus de chanfrein ou pourvus avec des chanfreins de volume moyen réduit par rapport aux chanfreins des blocs des parties médiane et intermédiaires.

Préférentiellement, les chanfreins, formés le long des arêtes transversales d'au moins un côté de la bande de roulement par rapport au plan équatorial, sont dégressifs, c'est-à-dire que les volumes moyens de chanfrein diminuent en allant du plan médian équatorial vers l'un au moins des bords de la bande de roulement.

Avantageusement, la présente invention peut être appliquée à un seul côté du pneu : il suffit en effet de repérer sur le pneu ou sur la bande de roulement le côté destiné à être positionné vers l'extérieur du véhicule sur lequel le pneu est prévu pour être monté. Ce repérage peut se faire au moyen d'un marquage spécifique sur le pneu ou sur la bande de roulement, ce marquage indiquant par exemple le côté devant être placé vers l'extérieur du véhicule. Cette disposition est applicable que les pneus employés soient ou non directionnels (des pneus directionnels comprenant, par exemple, une bande de roulement qui impose un sens de rotation et donc un sens de roulage). Ainsi, sur la partie située entre le plan équatorial et le côté extérieur les éléments de relief sur et au voisinage du bord extérieur sont dépourvus de tout chanfrein tandis que tous les éléments de relief entre le plan équatorial et le côté intérieur sont pourvus de chanfreins.

Avantageusement, il est intéressant de prévoir que la limite entre la partie sur laquelle les blocs sont pourvus de chanfreins et celle sur laquelle les blocs en sont dépourvus soit marquée par la formation d'une incision circonférentielle, c'est-à-dire une découpure pouvant se fermer au moins en partie lors du passage dans le contact avec une chaussée.

Avantageusement les chanfreins varient de façon continue ou quasi continue entre le bord de la bande destiné à être situé du côté intérieur d'un véhicule et le bord destiné à être du côté extérieur sur ce véhicule.

D'autres caractéristiques et avantages de l'invention ressortent de la description faite ci-après en référence aux dessins annexés qui montrent, à titre d'exemples non limitatifs, des variantes de réalisation de l'objet de l'invention.

### BRÈVE DESCRIPTION DES FIGURES

La figure 1 montre une vue en plan d'une partie d'une bande de roulement selon l'invention ;
La figure 2 montre une coupe d'un bloc de la bande de roulement selon la figure 1 ;
La figure 3 montre une vue en plan d'une partie d'une bande de roulement selon l'invention pour laquelle seul le côté destiné à être placé extérieur véhicule est concerné par une variation des chanfreins ;
La figure 4 montre une répartition de chanfreins sur les blocs d'une bande de roulement selon l'invention ;
la figure 5 montre une autre répartition de chanfreins sur les blocs d'une bande de roulement selon l'invention ;
La figure 6 montre une autre variante d'une bande de roulement selon l'invention.

### DESCRIPTION DES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

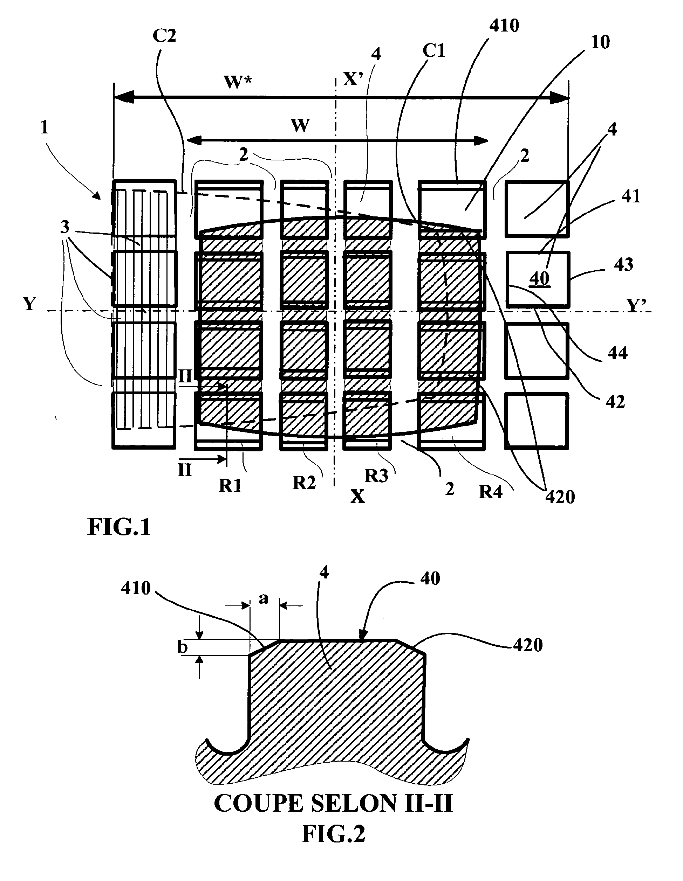

La figure 1 montre une vue en plan d'une partie d'une bande de roulement 1 selon l'invention. Cette bande de roulement 1 comprend une pluralité de rainures circonférentielles 2 et de rainures transversales 3 qui délimitent une pluralité de blocs 4. Chaque bloc 4 comprend une face de contact 40 formant une partie d'une surface de roulement 10 destinée à venir en contact avec une chaussée lors du roulage. Chaque bloc 4 comprend en outre quatre faces latérales coupant la face de contact selon des arêtes 41, 42, 43, 44. La direction XX' tracée sur le dessin indique la direction de déplacement du véhicule équipé avec ce pneu ; cette ligne XX' correspond également à la projection du plan équatorial dans l'empreinte de contact. Superposée à cette forme de la bande de roulement on a représentée en traits plein le contour C1 de l'empreinte de contact du pneu dans des conditions de roulage en ligne droite aux conditions d'utilisation (pression, charge) du pneu.

La largeur axiale de l'empreinte dans les conditions de roulage ligne droite est notée W. La distance axiale séparant les limites maximales de contact possible de cette bande de roulement en condition de virage est notée W*. L'invention prévoit que sur les parties de bande de part et d'autre de la largeur W des éléments de relief sont totalement dépourvues de tout chanfrein.

Ce contour C1 de l'empreinte de contact de surface totale S englobe quatre rangées R1, R2, R3, R4 de blocs 4 réparties de chaque côté du plan médian équatorial. Sur l'ensemble des blocs de ces quatre rangées, les arêtes 41, 42 de ces blocs parallèles à l'axe de rotation (ici représenté par un axe YY' perpendiculaire à l'axe XX') sont pourvues de chanfreins 410, 420 identiques quel que soit le bloc considéré. Ces chanfreins sont de forme plane comme on peut le voir sur la figure 2 montrant une coupe d'un bloc 4 selon une ligne de coupe II-II sur la figure 1. Sur cette figure 2 on a indiqué les dimensions d'un chanfrein par ses cotes a et b respectivement dans une direction parallèle à la surface de contact 40 du bloc et dans une direction parallèle à une face latérale du même bloc.

Cette bande a en roulage ligne droite une empreinte de contact de surface totale S comprenant une partie Sc correspondant à la surface dans le contact de tous les blocs dont les arêtes transversales sont pourvues de chanfrein et une partie Snc correspondant à la surface de contact dans l'empreinte des blocs dont les arêtes transversales sont dépourvues de chanfrein. Ces deux surfaces Sc et Snc sont mesurées sans tenir compte des surfaces équivalentes des rainures circonférentielles 2 mais en tenant compte des surfaces équivalentes dans l'empreinte des rainures transversales 3. Pour illustrer la méthode d'évaluation de la surface Sc, ladite surface a été hachurée avec des hachures obliques sur la figure 1.

Le rapport Snc/Sc est ici égal à zéro puisque dans le cas présent tous les blocs passant dans l'empreinte de contact en roulage ligne droite sont pourvus de chanfreins sur les arêtes transversales (correspondant aux arêtes dite d'attaque pour celle entrant la première dans le contact pendant le roulage et à l'arête dite de fuite pour celle sortant la dernière du contact)

Sur cette même figure 1, on voit un contour C2 en traits pointillés figurant le contour de l'empreinte de contact de ce même pneu aux mêmes conditions de pression et de charge (correspondant aux conditions d'utilisation) et en configuration équivalente à celle d'un virage sous une accélération transversale équivalente à 0.3 fois l'accélération de la pesanteur (notée "g").

Sous cette accélération de 0.3g, le pneu adopte une empreinte de contact de contour C2 qui est déportée axialement vers l'extérieur par rapport à l'axe médian XX' ; sous cette sollicitation transversale, il y a moins de blocs de la partie médiane qui sont sollicités dans le contact tandis que des blocs situés sur le bord de la bande axialement vers l'extérieur du virage viennent à passer dans la région de contact. Selon l'invention, ces blocs de la rangée de bord, qui ne sont dans l'empreinte de contact que lorsque le pneu est en virage, sont dépourvus de tout chanfrein sur leurs arêtes transversales.

Par ailleurs, cette bande a dans ces conditions équivalentes une empreinte de contact de surface totale S* comprenant une partie Sc* correspondant à la surface de tous les blocs dont les arêtes transversales sont pourvues de chanfrein et une partie Snc* correspondant à la surface de tous les blocs dont les arêtes transversales sont dépourvues de chanfrein. Ces deux surfaces Sc* et Snc* sont mesurées sans tenir compte des surfaces équivalentes des rainures circonférentielles mais en tenant compte des surfaces équivalentes dans l'empreinte des rainures transversales. Pour illustrer la méthode d'évaluation de la surface Snc*, ladite surface Snc* a été hachurée avec des hachures verticales sur la figure 1.

Le rapport Snc*/Sc* est ici égal à 20%.

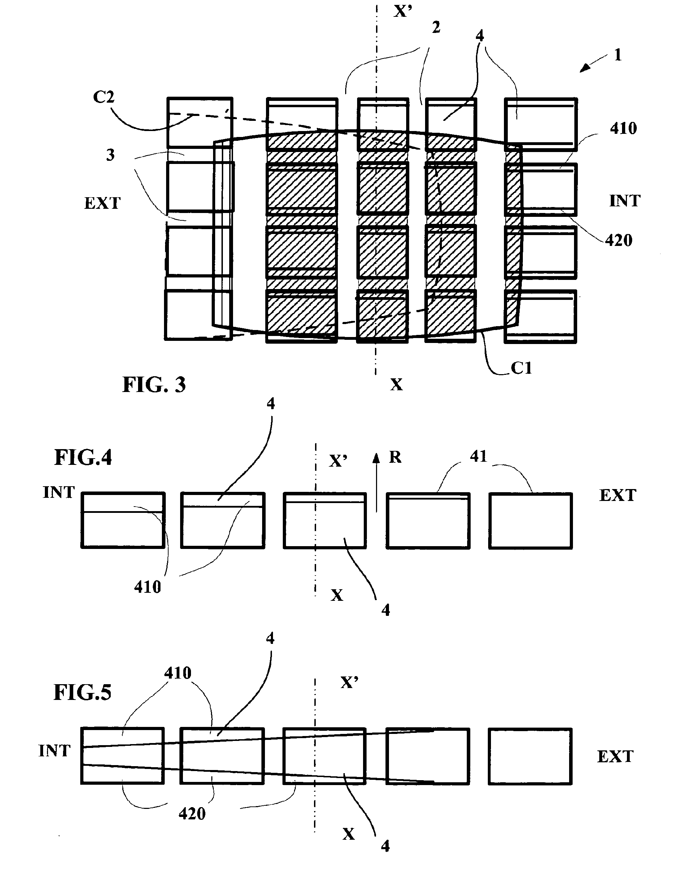

La figure 3 montre une vue en plan d'une partie d'une bande de roulement d'un pneu selon l'invention pour laquelle seuls les blocs du bord situé du côté destiné à être placé du côté extérieur véhicule sont dépourvus de chanfreins.

Sur cette figure 3, la bande de roulement 1 comprend à l'image de la bande de roulement de la figure 1 une pluralité de blocs 4 délimités par des rainures circonférentielles 2 et des rainures transversales 3.

On a superposé sur cette figure 3 le contour C1 de l'empreinte du pneu en conditions de roulage en ligne droite (contour en traits continus) et le contour C2 de l'empreinte du pneu en conditions équivalentes à celle d'un virage vers la droite sous 0.3 fois l'accélération g de la pesanteur.

Le pneu pourvu de cette bande de roulement présente un sens de montage indiqué par exemple sur l'un de ses flancs par un marquage approprié indiquant par exemple quel flanc doit être positionné vers l'extérieur du véhicule quand le pneu est monté sur l'un des essieux d'un véhicule (le côté destiné à être placé à l'extérieur est repéré par les lettres "EXT", tandis que l'autre côté est repéré par les lettres "INT").

Dans cette variante, tous les blocs entre le plan équatorial XX' et le bord axialement vers l'intérieur (INT) de la bande de roulement sont pourvus de chanfreins 410, 420 de géométrie identique tandis que seule une partie des blocs entre le plan équatorial XX' et l'autre bord côté (EXT) sont pourvus de chanfreins, les blocs axialement les plus à l'extérieur en étant dépourvus.

Ces deux surfaces Sc et Snc sont mesurées sans tenir compte des surfaces équivalentes des rainures circonférentielles 2 mais en tenant compte des surfaces équivalentes dans l'empreinte des rainures transversales 3. Pour illustrer la méthode d'évaluation de ces surfaces, la surface Sc a été hachurée avec des hachures obliques et la surface Snc a été hachurée avec des hachures verticales sur la figure 3.

Dans cette variante, le rapport Snc/Sc est égal à 5%.

Sur cette même figure 3, on distingue le contour C2 - en traits pointillés - de l'empreinte dans les conditions équivalentes à celles d'un virage sous une accélération transversale de 0.3g. Cette bande 1 a, dans ces conditions équivalentes, une empreinte de contact de surface totale S* formée d'une partie Sc* correspondant à la surface de tous les blocs dont les arêtes transversales sont pourvues de chanfrein et une partie Snc* correspondant à la surface de tous les blocs dont les arêtes transversales sont dépourvues de chanfrein. Le rapport Snc*/Sc* est ici égal à 10%.

La figure 4 montre une variante de répartition de chanfreins 410 sur une rangée axiale de blocs 4 d'une bande de roulement selon l'invention. Dans cette variante, la bande de roulement présente un sens préférentiel de montage et de rotation. Comme pour la bande de roulement de la figure 3 elle comprend un bord axial destiné à être positionné à l'extérieur du véhicule (repéré par EXT) et un bord à l'intérieur (INT). La bande de roulement selon cette variante comprend sur ces blocs 4 un chanfrein unique 410 sur l'arête d'attaque 41 (arête du bloc 4 rentrant la première dans le contact avec la chaussée pendant le roulage). Le sens de rotation est indiqué par la flèche R sur le dessin. Cette bande de roulement est destinée en conséquence à être placée en position avant droite sur un essieu d'un véhicule. Ce chanfrein varie par valeurs discrètes d'un bloc à son voisin en allant du bord INT vers le bord EXT. La valeur la plus grande de ces chanfreins est localisée sur le côté INT. Sur les blocs du bord EXT il n'y a pas de chanfreins (les arêtes d'attaque et de fuite sont dites "vives").

Ainsi en faisant en sorte que les volumes des chanfreins diminuent en allant du bord INT vers le bord EXT de la bande, il est possible de réduire encore le poids des chanfreins présents dans le contact lors d'un virage et de réduire le bruit de roulage en appui transversal.

Sur la figure 5, on a représenté une variante très proche de celle décrite avec le support de la figure 4. Dans cette variante, la bande de roulement comporte également un bord axial destiné à être placé à l'extérieur (EXT) par rapport au véhicule et un bord intérieur (INT). L'ensemble des blocs 4 du côté intérieur sont pourvus de chanfreins 410, 420 sur les arêtes transversales (respectivement sur les bords d'attaque et de fuite), ces chanfrein étant variables sur chaque bloc de manière à ce que en allant du bord INT vers le bord EXT, ils diminuent progressivement pour être nuls sur le milieu de l'avant dernier bloc avant le bord de la rangée la plus à l'extérieur.

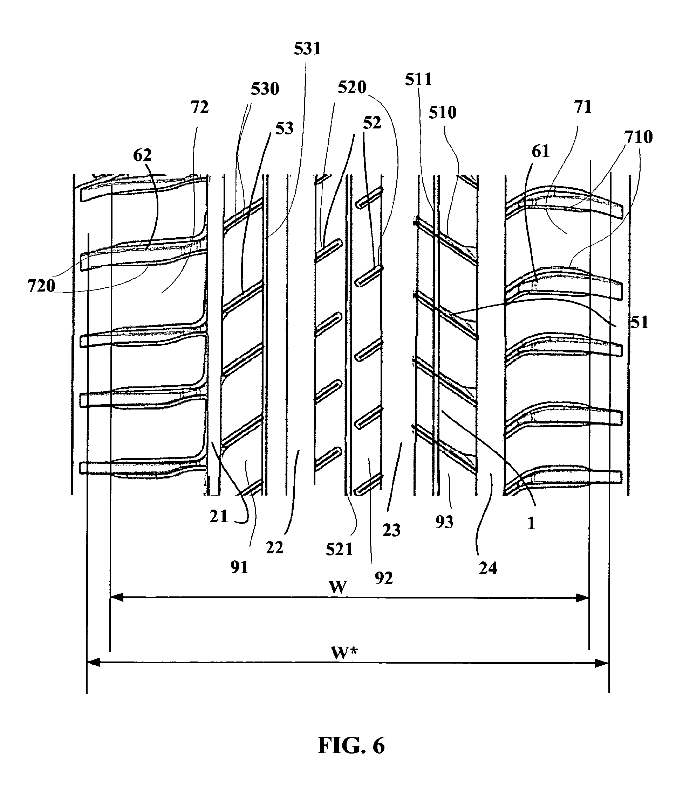

Sur la figure 6 on a représenté une partie d'une bande de roulement d'un pneu de dimension 255/55 R18. Cette bande de roulement de géométrie asymétrique et directionnelle comprend quatre rainures principales circonférentielles 21, 22, 23, 24 délimitant trois nervures circonférentielles 91, 92, 93 dans la partie médiane de la bande et des rangées de bord 71, 72 axialement à l'extérieur. Chacune des nervures est pourvue d'une petite rainure d'orientation circonférentielle 511, 521, 531 de profondeur inférieure à la profondeur des rainures principales circonférentielles.

Une des deux nervures axialement à l'extérieur de la partie médiane est pourvue d'incisions obliques 51 traversant en totalité cette nervure 93.

Les deux autres nervures 91, 92 sont pourvues d'incisions 52, 53 ne débouchant dans une rainure principale circonférentielle que sur un seul côté.

Toutes ces incisions 51, 52, 53 forment sur la surface de roulement de la bande des arêtes pourvues de chanfrein 510, 520, 530 de 1.5 mm par 1.5 mm (ce qui correspond à l'obtention d'un plan incliné à 45°). Ces incisions sont orientées de manière à conférer à la bande un sens de roulage préférentiel.

Cette bande comprend en outre sur chacun de ses bords axiaux une rangée 71, 72 de blocs délimités circonférentiellement par une pluralité de rainures transversales 61, 62 respectivement. En partie seulement les arêtes d'attaque et de fuite des blocs des rangées de bord 71, 72 sont pourvues de chanfreins 710, 720 de mêmes dimensions que celles des chanfreins des incisions sur les nervures intermédiaires. Ces chanfreins 710, 720 sur les blocs des bords sont variables à l'intérieur même de chaque bloc pour s'annuler à partir d'une largeur axiale donnée.

Sur la figure 6, on a indiqué la largeur W correspondant à la largeur sur la bande de roulement à l'intérieur de laquelle toutes les arêtes transversales ou obliques sont pourvues de chanfreins et la largeur W* de la zone maximale de contact de la bande de roulement avec une chaussée dans des conditions de roulage en virage. Axialement au-delà de la largeur W, les arêtes des blocs sont dépourvues de tout chanfrein. La largeur W pour ce pneu est égale à 206 mm tandis que la largeur maximale de contact en virage est égale à 228 mm.

La largeur de l'empreinte de contact en roulage en ligne droite est égale à 220 mm et est mesurée sur un sol plan aux conditions d'utilisation suivantes définies à partir des conditions de référence de ce pneu telles que données par le standard E.T.R.T.O. :
Montage sur une jante : 8J18
Pression : 2.3 bars
Charge : 80% du *"Load Index105"* défini par le standard E.T.R.T.O. soit 740 kg

Pour ce pneu et dans ces conditions, on mesure les surfaces d'empreinte suivantes (selon la méthode indiquée précédemment avec le support des figures 1 et 3) :
Sc = 339,2 mm²
Snc = 2,7 mm². Cette surface n'est pas nulle dans le cas présent puisqu'une partie de l'empreinte de contact affecte partiellement les blocs des bords de la bande de roulement axialement au-delà de la fin des chanfreins. La largeur de l'empreinte en condition de roulage ligne droite est ici égale à 214 mm (légèrement supérieure à la largeur W égale à 206 mm).

Le rapport Snc/Sc est ici égal à 0.7%.

En conditions de virage correspondant à une accélération transversale de 0.3g et pour une vitesse égale à 100 km/h et une pression de 2.3 bars, une charge de 740 kg on obtient :
Sc* = 233,8 mm²
Snc* = 32,64 mm²

Le rapport Snc* /Sc* est dans le cas présent égal à 14%.

Des tests sur véhicule ont été conduits au cours desquels le conducteur effectuait des changements de direction à vitesse constante de 100 km/h et en suivant une trajectoire sinusoïdale. Au cours de ce test, on enregistre les bruits de contact des pneus sur la chaussée. La comparaison entre un véhicule équipé de pneus selon l'invention et le même véhicule équipé de pneus identiques mais pour lesquels il y a des chanfreins sur toute la largeur de l'empreinte de contact y compris en appui en virage a permis de constater que des pneus selon l'invention permettait de réduire significativement le bruit en roulage dans les phases d'appui en virage.

L'invention ayant été décrite de manière générale, il doit être compris que cette invention n'est pas limitée par cette description et les variantes décrites. Il est clair que diverses modifications peuvent y être apportées sans sortir du cadre général de la présente invention définie par les revendications ci-jointes. Notamment la variante montrée avec la figure 6 peut être modifiée afin que la limite entre la partie sur laquelle les blocs sont pourvus de chanfreins et celle sur laquelle les blocs en sont dépourvus soit clairement marquée grâce la présence d'une incision circonférentielle, c'est-à-dire une découpure pouvant se fermer au moins en partie lors du passage dans le contact avec une chaussée.

## Revendications

1. Bande de roulement pour pneu de véhicule de tourisme, cette bande comprenant une pluralité de rainures (2) d'orientation générale circonférentielle délimitant une pluralité d'éléments de relief (4), cette bande de roulement comprenant en outre une pluralité de découpures (3) sous la forme de rainures et/ou d'incisions d'orientation transversale, chaque élément de relief (4) comprenant une face de contact (40) destinée à venir en contact avec la chaussée et des faces latérales coupant cette face de contact selon des arêtes destinées à rentrer en contact avec une chaussée lors d'un roulage, l'ensemble des faces de contact des éléments de relief formant une surface de roulement de la bande, cette bande de roulement s'étendant axialement de part et d'autre d'un plan médian - dit plan équatorial XX' - divisant la bande en deux parties de même largeur et jusqu'à des bords de la bande, ces bords de la bande étant définis comme les limites axiales de l'empreinte de contact du pneu sous ses conditions d'utilisation en ligne droite, cette bande comportant des chanfreins (410, 420) sur au moins une pluralité d'arêtes transversales des éléments de relief (4), chaque chanfrein (410, 420) étant défini par un volume moyen de chanfrein correspondant au volume de matière ôtée par rapport à la même géométrie de bloc sans chanfrein, cette bande ayant en roulage ligne droite une surface de contact totale S comprenant une partie Sc sur laquelle toutes les arêtes transversales sont pourvues de chanfrein et une partie Snc sur laquelle toutes les arêtes transversales sont dépourvues de chanfrein, ces deux surfaces Sc et Snc étant mesurées sans tenir compte des surfaces équivalentes des rainures circonférentielles 2 mais en tenant compte des surfaces équivalentes dans l'empreinte des rainures transversales 3, cette bande ayant dans un virage correspondant à une accélération transversale égale à 0.3g (g étant l'accélération de la pesanteur) une empreinte de contact de surface totale S* formée d'une partie Sc* comprenant des chanfreins sur toutes les arêtes transversales de ses éléments de relief et une partie Snc* dépourvue de tout chanfrein, ces deux surfaces Sc* et Snc* sont mesurées sans tenir compte des surfaces équivalentes des rainures circonférentielles 2 mais en tenant compte des surfaces équivalentes dans l'empreinte des rainures transversales 3, cette bande de roulement étant **caractérisée en ce que** le rapport Snc/Sc est au plus égal à 2% et **en ce que** le rapport Snc*/Sc* est au moins égal à 10%.

2. Bande de roulement selon la revendication 1 **caractérisée en ce que** les chanfreins (410, 420), formés le long des arêtes transversales d'au moins un côté de la bande de roulement par rapport au plan équatorial, sont dégressifs, c'est-à-dire que les volumes moyens des chanfreins diminuent en allant du plan médian équatorial vers l'un au moins des bords de la bande de roulement.

3. Bande de roulement selon l'une des revendications 1 ou 2 **caractérisée en ce que** la limite entre la partie sur laquelle les blocs (4) sont pourvus de chanfreins (410, 420) et celle sur laquelle les blocs en sont dépourvus est marquée par la formation d'une incision circonférentielle, c'est-à-dire une découpure pouvant se fermer au moins en partie lors du passage dans le contact avec une chaussée.

4. Bande de roulement selon la revendication 1 ou la revendication 2 **caractérisée en ce que** cette bande comprend un sens de montage indiqué par un marquage indiquant le coté extérieur correspondant au côté extérieur d'un véhicule sur lequel le pneu pourvu de ladite bande est prévu pour être monté et **en ce que** sur la partie située entre le plan équatorial et le côté extérieur les éléments de relief sur et au voisinage du bord extérieur sont dépourvus de tout chanfrein.

5. Bande de roulement selon la revendication 4 **caractérisée en ce que** les chanfreins varient de façon continue ou quasi continue entre le bord destiné à être du côté intérieur et le bord destiné à être du côté extérieur sur un véhicule.

## Patentansprüche

1. Laufstreifen für einen Pkw-Reifen, wobei dieser Laufstreifen mehrere im Wesentlichen in Umfangsrichtung ausgerichtete Rillen (2) aufweist, die mehrere Profilelemente (4) begrenzen, wobei dieser Laufstreifen außerdem mehrere Ausschnitte (3) in Form von quer ausgerichteten Rillen und/oder Einschnitten aufweist, wobei jedes Profilelement (4) eine Kontaktfläche (40), die dazu bestimmt ist, mit der Fahrbahn in Kontakt zu kommen, und seitliche Flächen, die diese Kontaktfläche an Kanten schneiden, die dazu bestimmt sind, beim Fahren wieder mit einer Fahrbahn in Kontakt zu treten, aufweist, wobei die Gesamtheit der Kontaktflächen der Profilelemente eine Lauffläche des Laufstreifens bildet, wobei sich dieser Laufstreifen axial beiderseits einer Mittelebene, äquatoriale Ebene XX' genannt, die den Laufstreifen in zwei Teile von gleicher Breite unterteilt, und bis zu Rändern des Laufstreifens erstreckt, wobei diese Ränder des Laufstreifens als die axialen Grenzen des Kontaktabdrucks des Reifens unter seinen Verwendungsbedingungen bei geradliniger Fahrt definiert sind, wobei dieser Laufstreifen Fasen (410, 420) mindestens an mehreren Querkanten der Profilelemente (4) aufweist, wobei jede Fase (410, 420) durch ein mittleres Fasenvolumen definiert ist, das dem entfernten Materialvolumen in Bezug auf dieselbe Blockgeometrie ohne Fase entspricht, wobei dieser Laufstreifen bei geradliniger Fahrt eine Gesamtkontaktfläche S aufweist, die einen Teil Sc, auf dem alle Querkanten mit einer Fase versehen sind, und einen Teil Snc, auf dem alle Querkanten nicht mit einer Fase versehen sind, aufweist, wobei diese zwei Flächen Sc und Snc ohne Berücksichtigung der äquivalenten Flächen der Umfangsrillen 2, jedoch unter Berücksichtigung der äquivalenten Flächen der Querrillen 3 im Abdruck gemessen werden, wobei dieser Laufstreifen während einer Kurvenfahrt, die einer Querbeschleunigung von 0,3 g entspricht (wobei g die Schwerebeschleunigung ist), einen Kontaktabdruck mit einer Gesamtfläche S* aufweist, die von einem Teil Sc*, der Fasen an allen Querkanten seiner Profilelemente aufweist, und einem Teil Snc*, der keinerlei Fasen aufweist, gebildet wird, wobei diese zwei Flächen Sc* und Snc* ohne Berücksichtigung der äquivalenten Flächen der Umfangsrillen 2, jedoch unter Berücksichtigung der äquivalenten Flächen der Querrillen 3 im Abdruck gemessen werden, wobei dieser Laufstreifen **dadurch gekennzeichnet ist, dass** das Verhältnis Snc/Sc höchstens gleich 2 % ist, und dadurch, dass das Verhältnis Snc*/Sc* mindestens gleich 10 % ist.

2. Laufstreifen nach Anspruch 1, **dadurch gekennzeichnet, dass** die Fasen (410, 420), die entlang der Querkanten mindestens einer Seite des Laufstreifens bezüglich der äquatorialen Ebene ausgebildet sind, abnehmend sind, das heißt dass sich die mittleren Volumina der Fasen von der äquatorialen Mittelebene zu wenigstens einem der Ränder des Laufstreifens hin verringern.

3. Laufstreifen nach einem der Ansprüche 1 oder 2, **dadurch gekennzeichnet, dass** die Grenze zwischen dem Teil, auf dem die Blöcke (4) mit Fasen (410, 420) versehen sind, und demjenigen, auf dem die Blöcke nicht mit diesen versehen sind, durch die Ausbildung eines in Umfangsrichtung verlaufenden Einschnitts markiert ist, das heißt eines Ausschnitts, der sich beim Durchgang durch den Kontakt mit einer Fahrbahn wenigstens teilweise schließen kann.

4. Laufstreifen nach Anspruch 1 oder Anspruch 2, **dadurch gekennzeichnet, dass** dieser Laufstreifen eine Montagerichtung aufweist, die durch eine Markierung angegeben ist, welche die Außenseite angibt, die der Außenseite eines Fahrzeugs entspricht, an dem der mit diesem Laufstreifen versehene Reifen montiert werden soll, und dadurch, dass auf dem zwischen der äquatorialen Ebene und der Außenseite befindliche Teil die Profilelemente am äußeren Rand und in der Nähe desselben mit keinerlei Fase versehen sind.

5. Laufstreifen nach Anspruch 4, **dadurch gekennzeichnet, dass** die Fasen zwischen dem Rand, der dazu bestimmt ist, sich auf der Innenseite zu befinden, und dem Rand, der dazu bestimmt ist, sich auf der Außenseite an einem Fahrzeug zu befinden, kontinuierlich oder quasi-kontinuierlich variieren.

## Claims

1. Tread for a passenger vehicle tyre, this tread comprising a plurality of generally circumferentially orientated grooves (2) delimiting a plurality of relief elements (4), this tread further comprising a plurality of cut-outs (3) in the form of transversely orientated grooves and/or slits, each relief element (4) comprising a contact face (40) intended to come into contact with the road and lateral faces cutting this contact face along edges intended to come into contact with a road during running, the set of the contact faces of the relief elements forming a rolling surface of the tread, this tread extending axially on either side of a mid-plane, called the equatorial plane XX', dividing the tread into two parts of the same width, and as far as the edges of the tread, these edges of the tread being defined as the axial boundaries of the footprint of the tyre in its conditions of use in a straight line, this tread having chamfers (410, 420) on at least a plurality of transverse edges of the relief elements (4), each chamfer (410, 420) being defined by an average chamfer volume corresponding to the volume of material removed with respect to the same block geometry without a chamfer, this tread having, in straight-line running, a total contact surface S comprising a part Sc in which all the transverse edges have chamfers and a part Snc in which all the transverse edges are free of chamfers, these two surfaces Sc and Snc being measured without taking into account the equivalent surfaces of the circumferential grooves 2 but taking into account the equivalent surfaces of the transverse grooves 3 in the footprint, this tread having, in a cornering manoeuvre corresponding to a transverse acceleration of 0.3g (where g is the acceleration due to gravity), a total footprint surface S* formed by a part Sc* comprising chamfers on all the transverse edges of its relief elements and a part Snc* free of any chamfer, these two surfaces Sc* and Snc* being measured without taking into account the equivalent surfaces of the circumferential grooves 2 but taking into account the equivalent surfaces of the transverse grooves 3 in the footprint, this tread being **characterized in that** the ratio Snc/Sc is equal to not more than 2% and **in that** the ratio Snc*/Sc* is equal to not more than 10%.

2. Tread according to Claim 1, **characterized in that** the chamfers (410, 420), formed along the transverse edges on at least one side of the tread with respect to the equatorial plane, are of diminishing size; that is to say, the average chamfer volumes decrease from the equatorial mid-plane towards at least one of the edges of the tread.

3. Tread according to either of Claims 1 and 2, **characterized in that** the boundary between the part in which the blocks (4) have chamfers and the part in which the blocks (410, 420) are free of chamfers is marked by the formation of a circumferential slit, that is to say a cut-out which may become closed, at least partially, during passage through the road contact area.

4. Tread according to Claim 1 or Claim 2, **characterized in that** this tread has a mounting direction, indicated by a marking indicating the outer side, corresponding to the outer side of a vehicle on which the tyre having said tread is intended to be mounted, and **in that**, on the part located between the equatorial plane and the outer side, the relief elements on and in the vicinity of the outer edge are free of any chamfer.

5. Tread according to Claim 4, **characterized in that** the chamfers vary continuously or practically continuously between the edge intended to be on the inner side and the edge intended to be on the outer side on a vehicle.
